# EUROPEAN PATENT APPLICATION

(11) **EP 2 647 854 A1**
(43) Date of publication of application: **09.10.2013**
(21) Application number: 12163368.9
(22) Date of filing: 05.04.2012
(51) Int. Cl.: F16C 7/02

(54) **Weight optimized connecting rod**

(71) Applicant: ThyssenKrupp Metalúrgica Campo Limpo Ltda., 13231-900 Campo Limpo Paulista-SP (BR)
(72) Inventor: Fonseca Galli, Luis Antonio, Sousas - Campinas, SP 13.106-006 (BR)
(74) Representative: Braun-Dullaeus, Karl-Ulrich

(57) **Abstract**

The present invention relates to a connecting rod (1) for an internal combustion engine with a big bearing portion (10) for forming a coupling arrangement with a crankshaft and with a small bearing portion (11) for forming a coupling arrangement with a piston, whereas between the big bearing portion (10) and the small bearing potion (11) is arranged a rod shaft (12). According to the invention the rod shaft (12) features a single piece construction with a first shaft beam (13) and a second shaft bean (14) arranged substantially parallel to the first shaft beam (13), whereas the shaft beams (13, 14) extend from the big bearing portion (10) to the small bearing portion (11) and feature a certain distance (15) to each other, whereas at least the small bearing portion (11) features an outer dimension (D) which is broader than the median width (WO) of the rod shaft (12) and the transition of the rod shaft (12) into the small bearing portion (11) features a concave transition portion (T1).

## Description

The present invention relates to a connecting rod for an internal combustion engine with a big bearing portion for forming a coupling arrangement with a crankshaft and with a small bearing portion for forming a coupling arrangement with a piston, whereas between the big bearing portion and the small bearing potion is arranged a rod shaft and the connecting rod features a single piece construction.

A connecting rod connects the piston to the crankshaft. This component is therefore subjected to high forces exerted on the piston by the combustion pressure and also to high inertial forces from the moving parts. When the combustion pressure forces the piston down the cylinder, the connecting rod must transfer the forces to the rotating crankshaft and which generates the output torque. Especially on internal combustion engines connecting rods are subjected to high cyclic loads comprised of dynamic tensile and compressive loads. It must be capable to transmit axial tension and compression loads, as well as sustain bending stresses, whereas these stresses can be caused by the thrust and/or pull on the piston and by the centripetal forces of the reciprocating rod shaft.

Connecting rods have bearing portions at both ends. The one facing the piston is called the small end, and the one on crankshaft side is called the big end. The small end is attached to the piston pin, gudgeon pin or wrist pin and the big end connects to the bearing journal on the crankshaft. Connecting rods operate under enormous stress from the reciprocating inertia load, which increases by the square of the engine speed increase. Failure of a connecting rod is one of the most common causes of catastrophic engine failure in cars, frequently ejecting the broken rod through the side of the crankcase and thereby rendering the engine irreparable. This can also be a result of fatigue near a physical defect in the rod or lubrication failure in a bearing due to faulty maintenance or failure of the rod bolts, caused by a defect or improper tightening. Accordingly there exists a need for improved connecting rods with both high strength and without increasing weight.

### PRIOR ART

Document WO 86/04122 A1 describes a connecting rod divided lengthwise along a surface into two mating pairs and is formed from fiber reinforced plastic materials with the majority of the reinforcing fibers extending substantially along the length of the connecting rod. It describes a lot of configurations having two steams at the shaft portion of the connecting rod, but the connecting rod as disclosed is not highly resilient.

Document US 5,048,368 A1 describes a connecting rod having an elongate tubular shank member defining a hollow section for an advantageous manufacturing. Piston and crankpin connecting members are attached to opposite ends of the shank member. The connecting members are provided with passages, which extend axially there within from the hollow section. Defined within the elongate tubular shank member is a radially extending internal aperture. Unfortunately it is not possible to forge the connecting rod due to the hollow construction of the shaft and thus the entire construction of the connecting rod is not highly resilient.

Document WO 2006/135351 A1 describes a connecting rod comprising a small-end part, a stem, a big-end fork part, a big-end cap and connecting elements. Grooves are made on the big-end fork part and the big-end cap with the possibility of the connecting elements arrangement be made of steel, aluminum alloy or titanium alloy wire, fiberglass, carbon or boron fiber. The connecting rod herein disclosed enables the reduction of connecting rod weight and the big-end cap dimensions, simplifies the connecting rod construction which enables to reduce the internal engine crankcase sizes and weight and also to simplify manufacturing techniques, reducing its costs, but the connecting rod as disclosed is not highly resilient.

Document US 7,810,411 A1 describes a connecting rod including a first end and a second end having a bore extending there through and adapted to be aligned with a piston pin bore receiving a piston pin. The second end further includes a terminal end and has a reduced width configuration. The bushing includes at least partially annular grooves disposed on the contact surface along at least a portion of opposed distal ends. The grooves substantially eliminate the need for the small end to undergo a deburring process after the second end is machined to provide a reduced width configuration, but the total weight of the connecting rod is high.

Document US 2004/0000216 A1 describes a connecting rod having two halves that, when assembled, include a piston pin end with a piston pin bearing, a crankpin end and a crankpin bearing and two rods that couple the two ends and define an interior aperture. As disclosed the connecting rod can be manufactured in an assembled form by way of extrusion or powdered-metal technologies. Disadvantageously, due to the assembled form of the two halves the connecting rod cannot be performed in a weight optimized manner.

### DISCLOSURE OF THE INVENTION

Thus, the invention has the objective to eliminate the above mentioned disadvantages. In particular it is an objective of the present invention to provide a connecting rod featuring an improved weight reduction combined with high resilience.

This objective is achieved by a connecting rod as taught by claim 1 of the present invention. A preferred embodiment of the invention is defined by the sub claims.

The invention discloses that the rod shaft features a first shaft beam and a second shaft beam arranged substantially parallel to the first shaft beam, whereas the shaft beams extend from the big bearing portion to the small bearing portion and feature a certain distance to each other, whereas at least the small bearing portion features an outer dimension which is broader than the median width of the rod shaft and the transition of the rod shaft into the small bearing portion features a concave transition portion.

The inventive connecting rod features a light weight combined with high stiffness and high resilience. Due to the light weight design of the rod shaft with a first shaft beam and a second shaft beam the connecting rod features a high stiffness, and the cross-section of the shaft beams are weight optimized due to a concave transition portion between the shaft beams and at least the small bearing portion. The special design of the rod shaft is a result of bionics-based topology optimization with algorithms for designing the connecting rod, leading to a reduction of unnecessary material portions of the entire connecting rod. By the use of bionics-based topology optimization algorithms it was a surprising result to divide the rod shaft into a first shaft beam and into a second shaft beam, there as between said shaft beams is performed a certain distance defining an aperture between said shaft beams. Moreover, the topology optimization leads to a special concave transition portion between the shaft beams and the outer dimension of the small bearing portion. Accordingly, the median width of the rod shaft is smaller than the main outer dimension of the small bearing portion. This leads to a kind of bottle neck represented by the rod shaft crossing over into a small bearing portion with an outer dimension which is broader than the width of the rod shaft.

With the two shaft beams and the certain distance between said shaft beams an aperture between the shaft beams is defined which extends from the big bearing portion to the small bearing portion in a longitudinal axis of the connecting rod. Thus, the shaft beams are divided over the entire length of the rod shaft from the small bearing portion to the big bearing portion. Within the spirit of the present invention a weight optimization rises not till then the rod shaft is divided in a first and in a second shaft beam over the entire length of the rod shaft, and the connecting rod does not feature any unnecessary material, which is not part of the stiffing structure. The idea of the present invention identifies any material part of a connecting rod which is not a necessary part of the stiffing structure, and the main feature is the combination of the aperture between the rod shafts on the one hand and the concave transition portion between the rod shaft and at least the small bearing portion on the other hand, and not until this features are combined in one single piece connecting rod, the weight is not optimized as reached with respect to the present invention.

According to yet another improvement of the connecting rod in the cross over area between the shaft beams is arranged a radius and/or a sequence of radii encircling the aperture, and preferably a single radius traces the aperture adjacent to the small bearing portion and/or preferably the sequence of radii traces the aperture adjacent to the big bearing portion. The sequence of radii encircling the aperture adjacent to the big bearing portion minimizes the use of a material of the connecting rod, which is preferably identified as ferrous material, e.g. steel or iron. According to yet another embodiment, the aperture adjacent to the small bearing portion can be traced by a sequence of radii, whereas said sequence of radii adjacent to the big and/or small bearing portion can preferably be limited to two radii.

The big bearing portion can feature a one piece construction or the big bearing portion is assembled and features a cap-and-stem construction, whereas each construction forms an entirely round bearing surface. In another preferred embodiment, the cap-and-stem construction features a parting section extending perpendicular to the longitudinal axis or extending inclined to the longitudinal axis with an inclination angle.

The small bearing portion can feature a tapered bearing head with at least one inclined side wall and preferred with two inclined side walls forming both sides of said tapered bearing head. A bearing head with a tapered portion is lighter than a bearing portion with side parallel walls. According to jet another embodiment, the small bearing portion can feature at least one concave shaped side wall and preferred two concave side walls forming both sides of said bearing head. These weight-optimized shapes lead to cylindrical small bearing portions with a broader lower side crossing over into the rod shaft and a smaller upper side diametral to the transition into the rod shaft.

According to yet another embodiment of the present invention the rod shaft features a weight relief structure forming at least one recess in the first and/or a second shaft beam. When the rod shaft features a recesses, the cross-section of the rod shaft is minimized to areas of high load transmissions, and the recesses are positioned in areas of the rod shaft, where load transmissions are not necessary with respect to a weight optimized connecting rod. For example the recesses are positioned in the outer surface of the shaft beams on the opposite side of the aperture between said shaft beams.

According to another improvement in weight optimization the transition of the rod shaft into the big bearing portion can feature a conclave transition portion. The transition portion from the rod shaft into the small bearing and/or the transition portion from the rod shaft into the big bearing can feature a radius or a sequence of radii or a polygon or a free form shape. In particular the free form shape can be a result of the use of bionics-based topology optimization algorithms with respect to weight optimization. In particular the transition of the rod shaft into the big bearing portion can be shaped by a special shape in the outer side, leading to a weight optimized stem as a part of the big bearing portion.

The big bearing and/or the small bearing can feature a bushing or the big bearing and/or the small bearing can feature a bearing surface formed by the surface of the connecting rod material itself. The small bearing can feature a coating applied to bearing diameter, or surface treatment or surface texturing on bearing diameter, which can be reworked or not to achieve final dimensions.

The rod shaft can be divided into two shaft beams in main directions. According to a first preferred embodiment the rod shaft is divided into two shaft beams in a lateral direction corresponding to the direction of the crankshaft axis. According to another embodiment of the present invention the rod shaft can be divided into two shaft beams with a lateral direction perpendicular to the direction of the crankshaft axis.

The aforementioned components as well as the claimed components and the components to be used in accordance with the invention in the described embodiments are not subject to any special exceptions with respect to their size, shape, material selection and technical concept such that the selection criteria known in the pertinent field can be applied without limitations.

### PREFERRED EMBODIMENTS OF THE INVENTION

Additional details, characteristics and advantages of the object of the invention are disclosed in the subclaims and the following description of the respective figures, which show preferred embodiments in an exemplary fashion of the subject matter according to the invention in conjunction with the accompanying figures, in which
- figure 1: represents an embodiment of a connecting rod having a weight optimized inventive rod shaft and a big bearing portion in a one piece construction,
- figure 1a: represents different sections of the rod shaft having two shaft beams as indicated in figure 1,
- figure 2: represents an embodiment of a connecting rod having a weight optimized inventive rod shaft and an assembled big bearing portion in a cap - and - stem construction,
- figure 3: represents an embodiment of a connecting rod having a weight optimized inventive rod shaft and an assembled big bearing portion in a cap - and - stem construction with an inclined parting section between the cap and the stem,
- figure 3a: shows a detailed view of the cross over area between the shaft beams with a sequence of radii,
- figure 4: represents another embodiment having a weight optimized inventive rod shaft with two shaft beams, whereas the shaft beams are divided in a lateral direction perpendicular to the direction of the crankshaft axis,
- figure 5: shows a detailed view of the small bearing portion having inclined side walls,
- figure 6: shows a detailed view of the small bearing portion having concave shaped side walls and
- figure 7: represents an embodiment of a connecting rod having an inventive rod shaft with recesses forming a weigh relief structure.

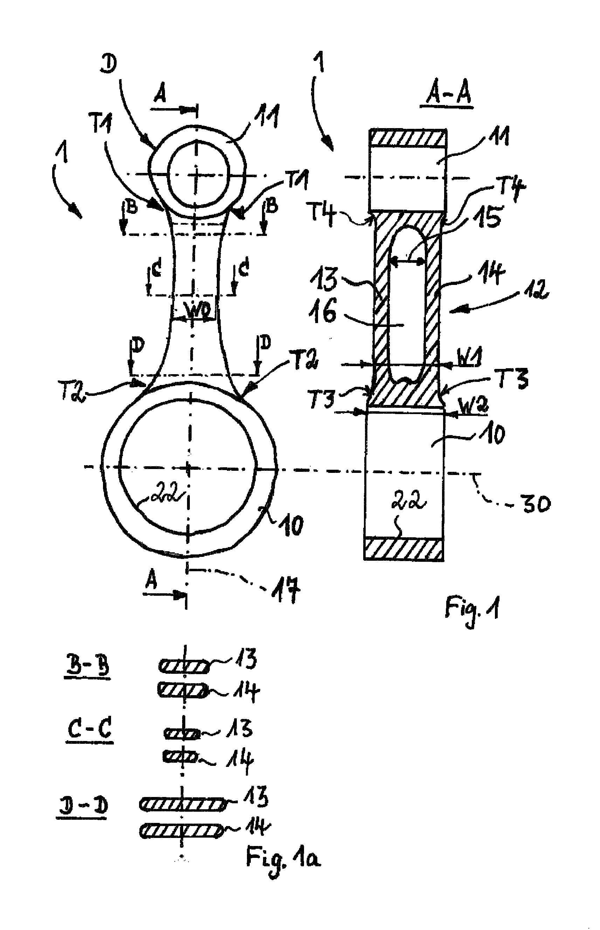

Figures 1 to figure 7 show different embodiments of the connecting rod 1 according to the present invention showing different features according to the present invention. The connecting rods 1 are shown in a side view on the left side and in a cross- sectioned view along the section line A-A on the right side as indicated in the side view.

The connecting rods 1 are applicable for internal combustion engines or compressors and feature a big bearing portion 10 for forming a coupling arrangement with a crankshaft and a small bearing portion 11 for forming a coupling arrangement with a piston, in particular with a piston pin. Between the big bearing portion 10 and the small bearing portion 11 is arranged a rod shaft 12, whereas the rod shaft 12 features a single piece construction, made of a single piece of metal, in particular made of a single piece of metal, in particular made of ferrous material like steel or iron. The connecting rod 1 is preferably made by casting or forging technology, followed by cutting or grinding and surface treatment processes, aiming the finishing functional surfaces of connecting rod 1.

According to the invention the connecting rod 1 feature a rod shaft 12 having a first shaft beam 13 and a second shaft beam 14, whereas said shaft beams 13 and 14 are arranged substantially parallel to each other. Each of the shaft beams 13 and 14 extend from the big bearing portion 10 to the small bearing portion 11 and feature a certain distance 15 to each other.

The small bearing portion 11 features an outer dimension D, whereas the small bearing portion 11 features a circular outer form and transits into the rod shaft 12.

The circular outer form represents the outer dimension D which is broader than the median width WO (see fig. 1) of the rod shaft 12 and the transition of the rod shaft 12 into the small bearing portion 11 features a concave transition portion T1, as represented on both sides of the connecting rod 1. The transition with a concave transition portion T1 leads to a smaller width of the rod shaft 12 compared to the outer dimension D of the small bearing portion 11.

The transition of the rod shaft 12 into the big bearing portion 10 features another concave transition portion as indicated with T2 on both sides of the connecting rod 1. Due to the concave transition portions T1 and T2 in the transition areas of the rod shaft 12 into the small bearing portion 11 and the big bearing portion 10 the rod shaft 12 obtains a weight optimized shape, and the cross sections B-B, C-C and D-D feature different levels of the rod shaft 12 as depicted in figure 1a, whereas the cross section C-C represents the median width W0, which can remain constant for a length, calculated to support the corresponding connecting rod loads. The different widths of the rod shaft 12 illustrate the weight optimized design of the rod shaft 12 based on the application of bionics-based topology optimization algorithm. In the first place by applying a rod shaft 12 divided into two shaft beams 13 and 14 and the shape optimization by concave transition portions T1 and T2 a optimal weight minimized connecting rod 1 can be provided which fulfills the requirement of the necessary resilience to withstand rising stresses, when the connecting rod 1 is applied in an internal combustion engine or in a compressor.

In detail figure 1 shows an embodiment of a connecting rod 1 with a closed big bearing portion 10 forming an inner bearing surface 22, and the connecting rod 1 can be arranged on the journal of a multi part crankshaft or on an end journal of a crankshaft, and the connecting rod can be mounted sidewise on said journal. Accordingly, the connecting rod 1 features a single piece construction including the big bearing portion 10. The longitudinal axis of the connecting rod 1 is indicated with 17, and the crankshaft axis is indicated with 30. The left depiction shows the connecting rod 1 in a side view, and the right depiction shows the connecting rod 1 along the cross-section A-A. Between the shaft beams 13 and 14 is defined an aperture 16, and the aperture 16 extends from the small bearing portion 11 to the big bearing portion 10. The lateral shaft width is indicated with W1, and the bearing width is indicated with W2, wherein W2 is broader than W1. The transition between the bearing width W2 and the shaft width W1 is indicated with T3 between the rod shaft 12 and the big bearing portion 10 and the transition between the shaft width W1 and the bearing width W2 with reference to the small bearing portion 11 is indicated with T4.

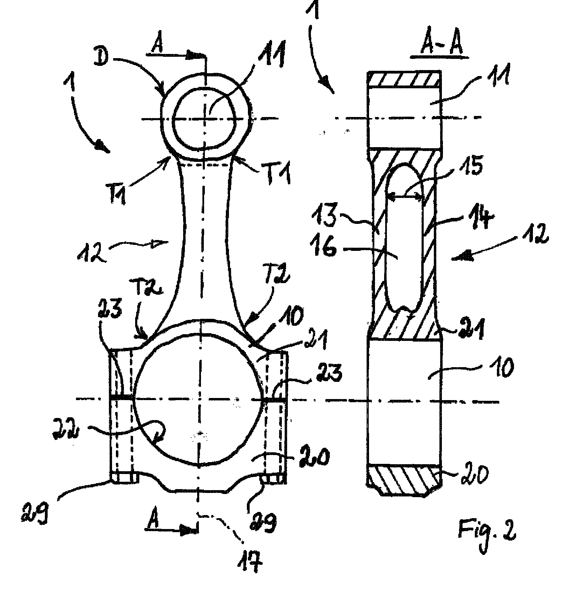

Figure 2 shows another embodiment of the connecting rod 1 having a big bearing portion 10 which is assembled and features a cap-and-stem construction with a cap 20 and a stem 21. The stem 21 forms the part of the big bearing portion 10 which crosses over into the rod shaft 12, and the rod shaft 12 crosses over into the small bearing portion 11. That means that the connecting rod 1 as claimed in the present invention features a single piece construction, which is also fulfilled, when the connecting rod 1 features an assembled big bearing portion 10 with a cap 20 and a stem 21. Thus, the single piece construction as claimed with the present invention is directed on a connecting rod 1 which features a stem 21 of the big bearing portion 10, a rod shaft 12 and a small bearing portion 11, made by a single piece.

The cap 20 is attached to the stem 21 by use of rod bolts 29, and the cap 20 is attached to the stem 21 in a parting section 23, which extends perpendicular to the longitudinal axis 17. When the cap 20 is attached to the stem 21, a closed inner bearing surface 22 is formed.

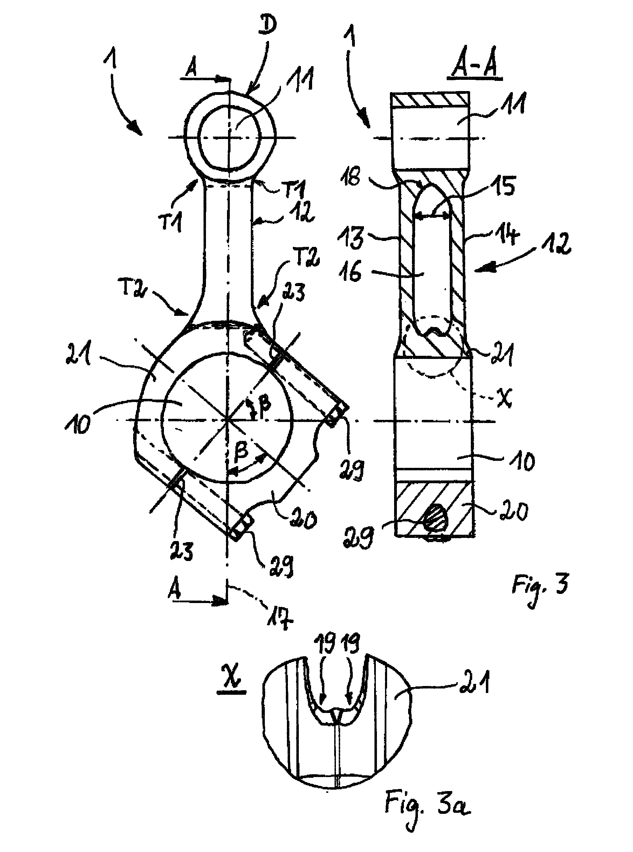

In figure 3 is depicted another connecting rod 1 with a rod shaft 12 featuring a first shaft beam 13 and a second shaft beam 14, whereas the shaft beams 13 and 14 extend between a big bearing portion 10 and a small bearing portion 11. The big bearing portion 10 is assembled and features a cap 20 and a stem 21, and the cap 20 is fastened to the stem 21 by means of rod bolts 29. The parting section 23 between the cap 20 and the stem 21 extends inclined to the longitudinal axis 17 by an inclination angle β.

The cross section A-A in the right depiction shows the aperture 16 between the first shaft beam 13 and the second shaft beam 14, and in the cross over area between the shaft beam 13 and the shaft beam 14 is arranged a radius 18 adjacent to the small bearing portion 11 and adjacent to the big bearing portion 10 the cross over area features a sequence of radii 19, as depicted in the detail X shown in figure 3a.

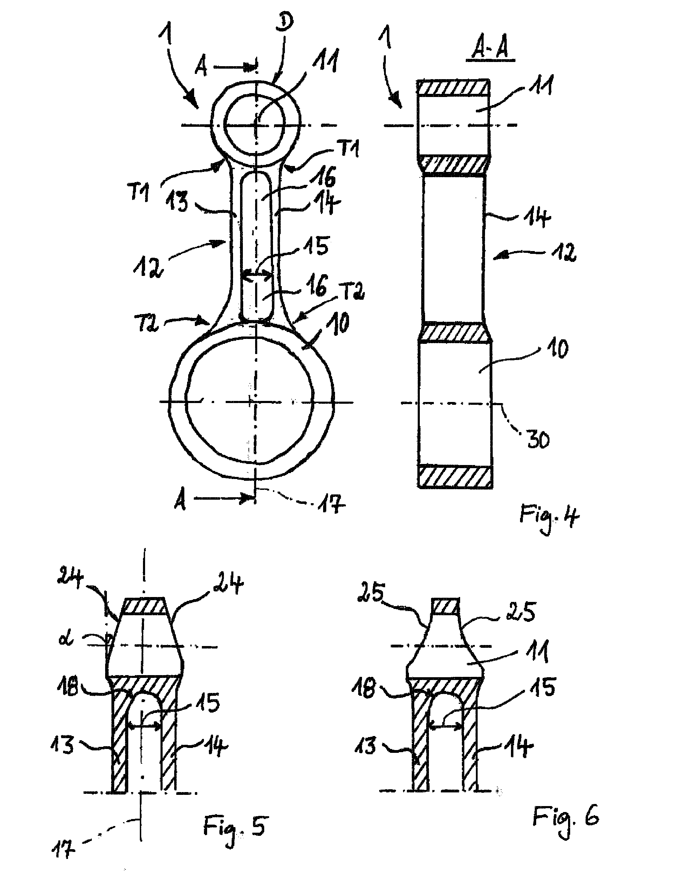

Figure 4 shows yet another embodiment of a connecting rod 1 with a rod shaft 12 featuring a first shaft beam 13 and a second shaft beam 14 extending between a big bearing portion 10 and a small bearing portion 11, whereas the big bearing portion 10 is performed in a single piece as already described in conjunction with figure 1. The rod shaft 12 is divided into the shaft beams 13 and 14 in a lateral direction perpendicular to the directions of the crankshaft axis 30. Accordingly, the aperture 16 with the distance 15 between the shaft beams 13 and 14 falls into the cross section A-A. The transitions between the rod shaft 12 and the small bearing portion 11 is indicated with T1 and the transition portion between the rod shaft 12 and the big bearing portion 10 is indicated T2.

Figure 5 shows another design of the small bearing portion 11 which features a tapered bearing head with inclined side walls 24, whereas the side walls 24 are inclined by the taper angle a relative to the longitudinal axis 17. Furthermore, the first shaft beam 13 and the second shaft beam 14 with the distance 15 in between said shaft beams 13 and 14 as well as the radius 18 in the crossing over between the shaft beams 13 and 14 are shown.

Figure 6 shows another embodiment of the small bearing portion 11 with concave shaped side walls 25 on both sides of the bearing head. Moreover, the shaft beams 13 and 14 with the distance 15 in between said shaft beams 13 and 14 and the radius 18 in the crossing over between the first and second shaft beam 13 and 14 are shown. The embodiments of the small bearing portion 11 in figure 5 and figure 6 shows further features of weight reduction, which is a result of the use of the bionics-based topology optimization algorithm.

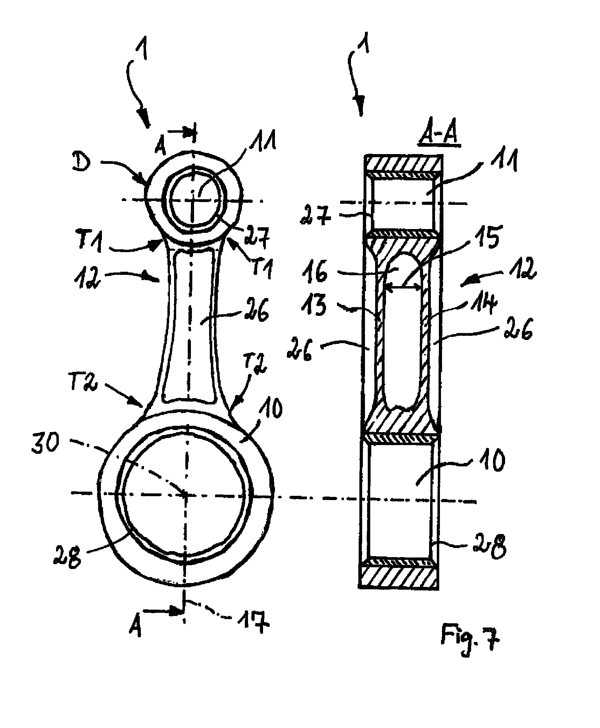

Finally figure 7 shows another embodiment of a connecting rod 1, whereas the first shaft beam 13 and the second shaft beam 14 features recesses 26 in the outer surface. The recesses 26 lead to another reduction of a weight without decreasing the stiffness of the rod shaft 12. By applying recesses 26 the shaft beams 13 and 14 form a kind of weight optimized splints.

According to another feature the small bearing portion 11 features a bushing 27 and the big bearing portion 10 features another bushing 28, which are for example pressed into the bearing holes. The bushings 27 and 28 can feature a material with a lower density compared to the material density of the connecting rod 9, leading to another weight optimization.

The present invention is not limited by the embodiments described above, which are represented as examples only and can be modified in various ways within the scope of protection defined by the appending patent claims. The radius 18 and the radii 19 are applicable for every of the embodiments and are described in conjunction with the embodiment in figure 3 in an exemplary fashion only. Moreover any further feature as described in conjunction with each figure is applicable for the connecting rod 1 as described in figure 4 having shaft beams 13 and 14 divided in a lateral direction.

### List of numerals

- 1: connecting rod

- 10: big bearing portion
- 11: small bearing portion
- 12: rod shaft
- 13: first shaft beam
- 14: second shaft beam
- 15: distance
- 16: aperture
- 17: longitudinal axis
- 18: radius
- 19: radius
- 20: cap
- 21: stem
- 22: bearing surface
- 23: parting section
- 24: inclined side wall
- 25: concave shaped side wall
- 26: recess
- 27: bushing
- 28: bushing
- 29: rod bolt
- 30: crankshaft axis

- W0: median width
- W1: shaft width
- W2: bearing width

- T1: transition portion
- T2: transition portion
- T3: transition portion
- T4: transition portion

- D: outer dimension of the small bearing portion

- α: taper angle
- β: inclination angle

## Claims

1. A connecting rod (1) for an internal combustion engine with a big bearing portion (10) for forming a coupling arrangement with a crankshaft and with a small bearing portion (11) for forming a coupling arrangement with a piston, whereas between the big bearing portion (10) and the small bearing potion (11) is arranged a rod shaft (12) and the connecting rod (1) features a single piece construction,
**characterized in that** the rod shaft (12) features a first shaft beam (13) and a second shaft beam (14) arranged substantially parallel to the first shaft beam (93), whereas the shaft beams (13, 14) extend from the big bearing portion (10) to the small bearing portion (11) and feature a certain distance (15) to each other, whereas at least the small bearing portion (11) features an outer dimension (D) which is broader than the median width (WO) of the rod shaft (12) and the transition of the rod shaft (12) into the small bearing portion (11) features a concave transition portion (T1).

2. A connecting rod (1) according to claim 1,
**characterized in that** in between the shaft beams (13, 14) is arranged a longitudinal aperture (16), whereas the aperture (16) extends from the big bearing portion (10) to the small bearing portion (11) in a longitudinal axis (17) of the connecting rod (1).

3. A connecting rod (1) according to claim 1 or 2,
**characterized in that** in the cross over area between the shaft beams (13, 14) is arranged a radius (18) and/or a sequence of radii (19) encircling the aperture (16), and preferably a single radius (18) traces the aperture (16) adjacent to the small bearing portion (11) and/or preferably the sequence of radii (19) traces the aperture (16) adjacent to the big bearing portion (10).

4. A connecting rod (1) according to one of the previous claims,
**characterized in that** the big bearing portion (10) features a one piece construction or the big bearing portion (10) is assembled and features a cap (20) - and - stem (21) construction, whereas each construction forms an entirely round bearing surface (22).

5. A connecting rod (1) according to claim 4,
**characterized in that** the cap (20) - and - stem (21) construction features a parting section (23) extending perpendicular to the longitudinal axis (17) or extending inclined to the longitudinal axis (17) with the inclination angle (p).

6. A connecting rod (1) according to one of the previous claims,
**characterized in that** the small bearing portion (11) features a tapered bearing head with at least one inclined side wall (24) and preferred with two inclined side walls (24) forming both sides of said tapered bearing head.

7. A connecting rod (1) according to one of the previous claims,
**characterized in that** the small bearing portion (11) features at least one concave shaped side wall (25) and preferred two concave side walls (25) forming both sides of said bearing head.

8. A connecting rod (1) according to one of the previous claims,
**characterized in that** the rod shaft (12) features a weight relief structure forming at least one recess (26) in the first and/or second shaft beam (13, 14).

9. A connecting rod (1) according to one of the previous claims,
**characterized in that** the transition of the rod shaft (12) into the big bearing portion (10) features a concave transition portion (T2).

10. A connecting rod (1) according to claim 9,
**characterized in that** the transition portion (T1) from the rod shaft (12) into the small bearing portion (11) and/or the transition portion (T2) from the rod shaft (12) into the big bearing portion (10) features a radius or a sequence of radii or a polygon shape or a free form shape.

11. A connecting rod (1) according to one of the previous claims,
**characterized in that** the big bearing and/or the small bearing features a bushing (27, 28) or the big bearing and/or the small bearing features a bearing surface (22) formed by the surface of the connecting rod material, preferably where a coating is applicable and/or surface treatment or texturing is applicable, preferably followed or not by a finishing process.

12. A connecting rod (1) according to one of the previous claims,
**characterized in that** the rod shaft (12) is divided into two shaft beams (13, 14) in a lateral direction corresponding to the direction of the crankshaft axis (30) or with a lateral direction perpendicular to the direction of the crankshaft axis (30).
